# EUROPÄISCHE PATENTSCHRIFT

(11) **EP 2 550 906 B1**
(45) Veröffentlichungstag und Bekanntmachung des Hinweises auf die Patenterteilung: **09.07.2014**
(21) Anmeldenummer: 12177001.0
(22) Anmeldetag: 19.07.2012
(51) Int. Cl.: A47J 43/07, A47J 43/08

(54) **Handrührer**
Hand mixer
Batteur a main

(30) Priorität: 29.07.2011 DE 102011080133
(43) Veröffentlichungstag der Anmeldung: 30.01.2013
(73) Patentinhaber: BSH Bosch und Siemens Hausgeräte GmbH, 81739 München (DE)
(72) Erfinder: Danijel, Roman, 3312 Ljubno (SI); Golavsek, Samo, 3312 Prebold (SI); Semeja, Uros, 3327 Smartno ob Paki (SI)

(56) Entgegenhaltungen:
- EP-B1- 1 191 870
- DE-T2- 60 004 240
- DE-T2- 69 600 634

## Beschreibung

### Gebiet der Erfindung

Die Erfindung betrifft einen Handrührer mit einem Gehäuse, einer Antriebseinrichtung mit einem Motor, einer durch eine erste Öffnung des Gehäuses zugänglichen ersten Kupplungseinrichtung zum Ankuppeln eines Rührwerkzeugs an die Antriebseinrichtung und einer durch eine zweite Öffnung des Gehäuses zugänglichen zweiten Kupplungseinrichtung zum Ankuppeln eines Mixwerkzeugs an die Antriebseinrichtung.

### Hintergrund der Erfindung

Aus DE 600 06 695 T2 ist ein in der Hand zu haltendes elektrisches Rühr- und Mixgerät bekannt, das zum selektiven Antrieb mindestens eines Rühransatzes oder eines mit hoher Geschwindigkeit drehenden Mixansatzes dient. Das Rühr- und Mixgerät weist einen elektrischen Antriebsmotor und zwei Kupplungsvorrichtungen auf, die mit der Welle des Motors verbunden sind und über jeweils zwei Eingriffsdurchlässe zur Aufnahme des Rühransatzes bzw. des Mixansatzes dienen. Das Rühr- und Mixgerät weist außerdem ein Sicherheitselement auf, das zwischen einer Ruhestellung, in welcher der Mixansatz in seine Kupplungsvorrichtung eingesetzt ist, und einer ausgerückten Stellung, in welche das Sicherheitselement infolge des Einsetzens des Rühransatzes in seine Kupplungsvorrichtung gebracht wird, bewegbar montiert ist.

Das Sicherheitselement wirkt derart mit einem Bedienungshebel zusammen, dass zum Betrieb des Mixansatzes der Bedienungshebel vom Benutzer gegen eine Federkraft gehalten werden muss, wobei der Bedienungshebel automatisch in eine Stoppstellung zurückkehrt, wenn das Gerät aus der Hand des Benutzers gleitet. Andererseits hält der Bedienungshebel beim Betrieb des Rühransatzes jede seiner Schaltstellungen, in die er vom Benutzer gebracht worden ist. Das Sicherungselement ist auch geeignet, entweder die Anwesenheit des Mixansatzes oder die Anwesenheit des Rühransatzes anzuzeigen. Eine Fehlbedienung durch gleichzeitiges Einsetzen des Rühr- und des Mixansatzes kann jedoch nicht genügend sicher ausgeschlossen werden. Das Problem einer Verschmutzung der jeweils nicht benutzten Kupplungsvorrichtung durch Eindringen von Partikeln oder Flüssigkeiten wird nicht diskutiert.

In DE 696 00 634 T2 ist ein elektrisch betriebener Handschläger und -mixer beschrieben, mit einem Körper von im Ganzen prismatischer Form, der einen elektrischen Antriebsmotor enthält, mit einer drehbaren Kupplungsvorrichtung für einen Schlagzusatz und einer Öffnung für den Durchtritt eines Mixzusatzes zum Verbinden mit der Welle des Motors und mit einem Ausstoßelement zum Freigeben des Schlagzusatzes unter der Wirkung eines handbetätigten Steuerelements. Weiterhin ist eine mechanische Sicherheitsvorrichtung vorgesehen, die aus einem Gestänge oder Stangen aus Metall besteht, die durch eine elastische Rückstellvorrichtung beaufschlagt ist und die so mit dem Ausstoßelement und einem Schaft zum Einsetzen des Mixzusatzes zusammenwirkt, das entweder nur das Einsetzen des Schlagzusatzes oder nur das Einsetzen des Mixzusatzes ermöglicht wird. Die Öffnung für den Mixzusatz kann durch ein handbetätigtes Verstellelement geschlossen werden. Mögliche Sicherheitsrisiken bei einer Fehlbedienung durch einen unabsichtlichen Eingriff des Benutzers in die jeweils nicht benutzte Kupplungsvorrichtung sowie das Problem einer Verschmutzung der Kupplungsvorrichtung für den Schlagzusatz werden nicht angesprochen.

Gemäß EP 1 191 870 B1 weist ein elektrisches Handrühr- und Mixgerät für den Antrieb von mindestens einem Rühransatz oder einem Mixansatz eine Sicherheitseinrichtung mit einem mechanisch verschiebbaren Teil auf, das die Eintrittsöffnung des Mixansatzes blockieren kann und das auch geeignet ist, die Eintrittsöffnung für den Rühransatz zu blockieren. Hierfür ist das mechanische Teil im Körper des Handrühr- und Mixgeräts in der Nähe der Innenseite der unteren Wand des Körpers horizontal verschiebbar montiert. Ein unabsichtlicher Eingriff eines Benutzers oder ein Eindringen von Partikeln oder Flüssigkeiten in die Eintrittsöffnung für den Mixansatz kann hierdurch nicht verhindert werden.

### Der Erfindung zugrundeliegende Aufgabe

Der Erfindung liegt die Aufgabe zugrunde, einen Handrührer der eingangs genannten Art anzugeben, mit dem die Sicherheit auch für den Fall einer Fehlbedienung erhöht werden kann. Insbesondere soll ein gleichzeitiges Einsetzen eines Rührwerkzeugs und eines Mixwerkzeugs mit einer erhöhten Sicherheit verhindert werden können. Ferner soll möglichst auch ein unabsichtlicher Eingriff eines Benutzers und/oder eine Verschmutzung durch Eindringen von Partikeln oder Flüssigkeiten in die jeweils nicht benutzte Öffnung des Gehäuses vermieden werden können.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Handrührer mit den Merkmalen des Anspruchs 1.

Ein erfindungsgemäßer Handrührer weist ein Gehäuse auf, das insbesondere einen Handgriff zum Halten des Handrührers bei der Benutzung durch einen Benutzer umfassen kann und das ansonsten beispielsweise annähernd prismatisch geformt sein kann. Innerhalb des Gehäuses ist eine Antriebseinrichtung aufgenommen, die einen elektrischen Motor und ggf. ein Getriebe umfasst. Die Antriebseinrichtung kann insbesondere eine Mehrzahl von durch den Motor ggf. über das Getriebe antreibbaren Wellen umfassen, die in unterschiedliche Richtungen gerichtete Drehachsen aufweisen können und mit unterschiedlichen Unter- bzw. Übersetzungen mit dem Motor verbunden sein können. Der Handrührer weist ferner eine erste Kupplungseinrichtung zum Ankuppeln eines Rührwerkzeugs an die Antriebseinrichtung auf, wobei die erste Kupplungseinrichtung durch eine erste Öffnung des Gehäuses von außen zugänglich ist, sowie eine zweite Kupplungseinrichtung zum Ankuppeln eines Mixwerkzeugs an die Antriebseinrichtung, wobei die zweite Kupplungseinrichtung durch eine zweite Öffnung des Gehäuses von außen zugänglich ist. Der Handrührer kann ferner Bedienelemente zum Ansteuern des Motors und/oder zum Auswerfen des Rühr- bzw. des Mixwerkzeugs aus der jeweiligen Kupplungseinrichtung aufweisen.

Erfindungsgemäß weist der Handrührer erste und zweite Verschlussmittel zum Verschließen der ersten bzw. der zweiten Öffnung auf, die derart miteinander verbunden sind, dass entweder nur die erste oder nur die zweite Öffnung geöffnet ist. Die ersten und die zweiten Verschlussmittel wirken daher zum wechselweisen Öffnen und Verschließen der ersten oder der zweiten Öffnung zusammen, so dass dann, wenn die erste Öffnung geöffnet ist, die zweite Öffnung verschlossen ist und umgekehrt. Somit ist jeweils nur eine Öffnung geöffnet, so dass zu jedem Zeitpunkt nur in eine Öffnung ein Werkzeug in den Handrührer eingesetzt werden kann.

Hierdurch kann nicht nur besonders sicher verhindert werden, dass gleichzeitig ein Rührwerkzeug und ein Mixwerkzeug in die jeweilige Kupplungseinrichtung des Handrührers eingesetzt und mit der Antriebseinrichtung verbunden werden, sondern es ist auch der Vorteil erreichbar, dass ein versehentlicher Eingriff in die jeweils nicht benutzte Öffnung verhindert wird. Auf diese Weise ist eine besonders hohe Sicherheit gegen Fehlbedienungen erreichbar. Ferner ist der weitere Vorteil erreichbar, dass ein Eindringen von Partikeln, wie etwa Mehlstaub, sowie von Flüssigkeitsspritzern durch die Öffnungen in das Innere des Gehäuses, insbesondere in die Kupplungseinrichtungen, weitgehend vermieden werden kann. Hierdurch kann sowohl die Sicherheit bei der Benutzung des Handrührers als auch die Lebensdauer des Handrührers gesteigert werden.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Erfindungsgemäss umfasst das erste Verschlussmittel mindestens eine erste Verschlussklappe zum Verschließen der ersten Öffnung und das zweite Verschlussmittel mindestens eine zweite Verschlussklappe zum Verschließen der zweiten Öffnung. Die Verschlussklappen können jeweils insbesondere starr ausgebildet sein und innerhalb des Gehäuses verschiebbar gehalten sein, bevorzugt entlang der Innenseite einer Außenwand des Gehäuses. Hierdurch ist ein besonders sicheres Verschließen der ersten bzw. der zweiten Öffnung möglich. Insbesondere können die mindestens eine erste bzw. die mindestens eine zweite Verschlussklappe derart stabil ausgebildet sein, dass auch beim versehentlichen Ansetzen des Rühr- bzw. Mixwerkzeugs die jeweilige Öffnung sicher verschlossen bleibt und eine Beschädigung der Verschlussklappe vermieden wird.

Erfindungsgemäss sind die mindestens eine erste und die mindestens eine zweite Verschlussklappe über ein auf Zug belastbares flexibles Verbindungsmittel, insbesondere über ein langerstrecktes flexibles Verbindungsmittel, besonders bevorzugt über ein flexibles Band, miteinander verbunden. Ein solches flexibles Band kann beispielsweise aus Kunststoff oder aus einem textilen Material bestehen. Es kann aber auch etwa ein Seil oder ein Draht zur Verbindung der mindestens einen ersten mit der mindestens einen zweiten Verschlussklappe dienen. Das flexible Verbindungsmittel ist insbesondere nur auf Zug belastbar und ausreichend flexibel, um bei einer Führung über ein Umlenkmittel eine Umlenkung einer übertragenen Zugkraft zum Zusammenwirken der ersten und zweiten Verschlussmittel zu ermöglichen. Zur Führung des flexiblen Verbindungsmittels können Führungsflächen, Umlenkflächen, Umlenkrollen oder andere Führungs- und Umlenkmittel vorgesehen sein.

Dadurch, dass die mindestens eine erste und die mindestens eine zweite Verschlussklappe über ein flexibles Verbindungsmittel miteinander verbunden sind, ist ein größtmögliches Maß an konstruktiver Gestaltungsfreiheit in der Anordnung und Ausbildung der Öffnungen zum Einsetzen des Rühr- bzw. des Mixwerkzeugs erreichbar. Insbesondere kann eine unter ergonomischen und unter Sicherheitsgesichtspunkten optimale Gestaltung, etwa eine versetzte oder winklige Anordnung, gewählt werden und auch bei einer solchen Anordnung ein Zusammenwirken der ersten und zweiten Verschlussmittel zum wechselseitigen Verschließen der ersten oder der zweiten Öffnung ermöglicht werden.

In bevorzugter Weise ist das flexible Verbindungsmittel vorgespannt. Die Vorspannung kann durch eine Federkraft einer an dem flexiblen Verbindungsmittel angreifenden Feder, insbesondere einer Schraubenfeder, erzeugt werden. Es kann aber auch das flexible Verbindungsmittel selbst elastisch ausgebildet sein und unter Vorspannung im Handrührgerät eingebaut sein.

Dadurch, dass das flexible Verbindungsmittel unter Vorspannung steht, können auf einfache Weise Bewegungen der Verschlussklappen in beide Richtungen übertragen werden. Auf diese Weise ist ein besonders einfacher und betriebssicherer Aufbau erreichbar.

Gemäß einer bevorzugten Ausführungsform der Erfindung ist mindestens eine der Verschlussklappen durch eine Feder vorgespannt. Insbesondere kann die Feder direkt an der Verschlussklappe angreifen, wobei das flexible Verbindungsmittel an einem dem Angriffspunkt der Feder gegenüberliegenden Punkt der Verschlussklappe an dieser angreift. Das flexible Verbindungsmittel kann beispielsweise dadurch an der Verschlussklappe angreifen, dass es mit einer Kleb-, Schraub- oder Nietverbindung daran befestigt ist oder auch etwa durch eine Öse der Verschlussklappe hindurch gezogen ist. Insbesondere kann die Feder an der zweiten Verschlussklappe, die zum Verschließen derjenigen Öffnung des Gehäuses vorgesehen ist, durch die der Mixansatz in die zweite Kupplungseinrichtung einsetzbar ist, angreifen. Hierdurch ist ein weiter vereinfachter konstruktiver Aufbau erreichbar.

Vorzugsweise ist die Verschlussklappe in eine Schließstellung vorgespannt. Sollte beispielsweise das flexible Verbindungsmittel reißen oder von einem Führungsmittel abgleiten, so wird die Verschlussklappe in eine Schließstellung gebracht. Hierdurch ist bei einem einfachen Aufbau eine weiter erhöhte Sicherheit erreichbar. Ein besonderer Sicherheitsgewinn ist dabei erreichbar, wenn die Verschlussklappe, die in Schließstellung vorgespannt ist, die zweite Verschlussklappe ist, da der Mixansatz üblicherweise mit einer besonders hohen Drehzahl betrieben wird und ein unabsichtlicher Eingriff in die zweite Kupplungseinrichtung daher mit einem besonders hohen Verletzungsrisiko verbunden wäre.

Gemäß einer bevorzugten Ausführungsform der Erfindung ist die mindestens eine erste Verschlussklappe als Teil eines Verschlussschiebers ausgebildet, der innerhalb des Gehäuses verschiebbar ist. Der Verschlussschieber weist in vorteilhafter Weise eine Öse auf, in die ein Mitnehmer des flexiblen Verbindungsmittels eingreift. Die mindestens eine erste Verschlussklappe kann einstückig mit dem Verschlussschieber ausgebildet sein oder mit diesem durch Klebung, Verschraubung, Vernietung oder in einer anderen Weise verbunden sein. Der Mitnehmer kann mit dem flexiblen Verbindungsmittel, insbesondere mit einem flexiblen Band, durch Kleben, Klemmen, Schrauben, Nieten oder auf eine andere Weise verbunden sein. Das flexible Verbindungsmittel kann insbesondere mit einem ersten Ende an der zweiten Verschlussklappe angreifen, mit einem zweiten Ende innerhalb des Gehäuses beweglich gehalten oder, sofern das flexible Verbindungsmittel selbst elastisch ausgebildet ist, innerhalb des Gehäuses befestigt sein, und in einem mittleren Bereich den Mitnehmer tragen. Hierdurch wird auf konstruktiv besonders einfache Weise ein Zusammenwirken der mindestens einen ersten Verschlussklappe mit der mindestens einen zweiten Verschlussklappe ermöglicht.

Vorzugsweise bildet die Öse ein sich in Verschieberichtung des Verschlussschiebers erstreckendes Langloch aus, innerhalb dessen der Mitnehmer über eine durch zwei Anschläge begrenzte Strecke beweglich ist. Insbesondere ist der Mitnehmer in dem Langloch geführt, wobei das Langloch eine Länge aufweist, die länger ist als die entsprechende Länge des Mitnehmers. Der Mitnehmer kann somit innerhalb des Langlochs je nach Verschieberichtung des Bands unterschiedliche Positionen zwischen den zwei Anschlägen einnehmen. Aufgrund der Reibung des Verschlussschiebers bei dessen Bewegung innerhalb des Gehäuses wird der Verschlussschieber insbesondere erst dann vom Mitnehmer mitgenommen, wenn der Mitnehmer bei einer Bewegung des flexiblen Verbindungsmittels einen Anschlag erreicht hat.

Hierdurch ist der weitere Vorteil erreichbar, dass eine derartige Verbindung der mindestens einen ersten Verschlussklappe und der mindestens einen zweiten Verschlussklappe miteinander erreicht werden kann, bei der die mindestens eine erste und die mindestens eine zweite Verschlussklappe unterschiedlich lange Verschiebewege aufweisen. Dies kann beispielsweise dann vorteilhaft sein, wenn die erste Öffnung eine andere Größe aufweist als die zweite Öffnung. So kann etwa die zweite Öffnung, die zum Durchführen eines Mixwerkzeugs ausgebildet ist, kreisförmig mit einem größeren Durchmesser ausgebildet sein, während die erste Öffnung zum Durchführen eines Rührwerkzeugs mit einem kleineren Durchmesser ausgebildet sein kann. Zum Verschließen der ersten Öffnung ist in diesem Fall ein geringerer Verschiebeweg der Verschlussklappe notwendig als zum Verschließen der zweiten Öffnung. In einem geringeren Maße können unterschiedlich lange Verschiebewege bei Verwendung eines elastischen Verbindungsmittels beispielsweise auch dadurch ausgeglichen werden, dass am Anbringungsort des Mitnehmers die Längung des Verbindungsmittels geringer sein kann als am ersten Ende des Verbindungsmittels, mit dem dieses an der mindestens einen zweiten Verschlussklappe ansetzt.

Gemäß einer bevorzugten Ausführungsform wirkt das flexible Verbindungsmittel mit einem Steuerungselement zum Ansteuern des Motors zusammen. So kann beispielsweise eine unterschiedliche Ansteuerung des Motors hinsichtlich der Leistung und/oder hinsichtlich verfügbarer Schaltstufen vorgesehen sein, je nachdem, ob ein Rühr- oder ein Mixwerkzeug einsetzbar bzw. eingesetzt ist. Das flexible Verbindungsmittel kann beispielsweise mit einem ersten Ende an der zweiten Verschlussklappe ansetzen und mit einem zweiten Ende innerhalb einer Steuerungseinheit gehalten sein, wobei ein Steuerungselement je nach Position bzw. Spannung des flexiblen Verbindungsmittels unterschiedliche Betriebs- oder Bedienungsweisen ermöglichen kann. Hierdurch ist eine besonders einfache Bedienung bei einer möglichst vielseitigen Verwendbarkeit des Handrührers erreichbar.

Weiterhin ist es bevorzugt, dass die mindestens eine erste oder die mindestens eine zweite Verschlussklappe mit einer Handhabe zum Betätigen der ersten und der zweiten Verschlussmittel versehen ist. Hierdurch wird eine besonders einfache Bedienung ermöglicht, insbesondere ist aufgrund des Zusammenwirkens der Verschlussmittel zum abwechselnden Verschließen der ersten oder der zweiten Öffnung durch Betätigung der Handhabe eine Betätigung beider Verschlussmittel möglich. Es können auch sowohl mindestens eine erste als auch mindestens eine zweite Verschlussklappe jeweils eine solche Handhabe aufweisen. Dies ermöglicht es dem Benutzer, eine beliebige der Handhaben zu wählen, wodurch die Bedienung weiter vereinfacht wird.

Gemäß einer bevorzugten Ausführungsform der Erfindung definieren die erste und die zweite Öffnung näherungsweise eine erste und eine zweite Öffnungsebene, die nicht miteinander zusammenfallen, d.h. nicht in einer Ebene angeordnet sind, und insbesondere auch nicht parallel zueinander liegen. Durch die erste und die zweite Kupplungseinrichtung werden ferner eine erste und eine zweite Kupplungsrichtung zum Einsetzen der jeweiligen Werkzeuge in die betreffende Kupplungseinrichtung, die im Wesentlichen senkrecht zur jeweiligen Öffnungsebene stehen, definiert. Die erste und die zweite Kupplungsrichtung sind somit insbesondere nicht parallel zueinander gerichtet. Hierdurch wird die Handhabung die Handrührers erleichtert, da ein Rühr- und ein Mixwerkzeug in der Regel unterschiedliche Längen aufweisen, bei der Benutzung unterschiedlich gehalten werden und daher eine unterschiedliche Ausrichtung des Handgriffs des Handrührers zum jeweiligen Werkzeug vorteilhaft ist.

Das Gehäuse kann im Bereich der Öffnungen eine gekrümmte Oberfläche aufweisen, so dass die erste und/oder die zweite Öffnung nicht exakt eine Ebene definieren. Dies kann etwa aus Sicherheits- oder Handhabungsgründen vorteilhaft sein. In diesem Fall kann die mindestens eine erste und/oder die mindestens eine zweite Verschlussklappe gekrümmt ausgebildet sein und entlang einer gekrümmten Bahn innerhalb des Gehäuses verschiebbar sein.

Bevorzugt können die erste und die zweite Öffnungsebene näherungsweise senkrecht aufeinander stehen; auch die Kupplungsrichtungen stehen dann näherungsweise senkrecht aufeinander. In vorteilhafter Weise sind die erste und die zweite Öffnung an unterschiedlichen Seiten des Gehäuses angeordnet. So kann beispielsweise bei einem aus Fertigungs- und Ergonomiegründen näherungsweise prismatisch oder quaderförmig ausgebildeten Gehäuse das Rührwerkzeug von einer Unterseite einsetzbar sein, während das Mixwerkzeug von einer Rückseite einsetzbar ist. Hierdurch wird die Handhabung des Handrührers zur abwechselnden Benutzung eines Rühr- oder eines Mixwerkzeugs weiter erleichtert. Ferner ist hierdurch eine besonders einfache konstruktive Ausführung erreichbar.

Vorzugsweise umfasst das Rühr- und/oder das Mixwerkzeug, insbesondere das Rührwerkzeug, mehrere zusammenwirkende Teilwerkzeuge. Die jeweilige Kupplungseinrichtung umfasst in diesem Falle mehrere Kupplungen für die jeweiligen Teilwerkzeuge. Beispielsweise kann das erste Werkzeug als ein Paar von Rührbesen oder Knethaken ausgebildet sein, während das Mixwerkzeug als Stabmixansatz ausgebildet sein kann. Hierdurch kann eine besonders vielseitige Verwendbarkeit des Handrührers erreicht werden.

In bevorzugter Weise umfasst die erste und/oder die zweite Öffnung, insbesondere die erste Öffnung, mehrere Teilöffnungen. Die ersten und/oder die zweiten Verschlussmittel können dementsprechend eine Mehrzahl von Verschlussklappen aufweisen. Hierdurch ist eine besonders einfache konstruktive Ausgestaltung zum Antreiben von Rührwerkzeugen, die mehrere miteinander zusammenwirkende Teilwerkzeuge umfassen, erreichbar.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: einen Handrührer in einer Seitenansicht;
- Fig. 2: ein Ausführungsbeispiel eines erfindungsgemäßen Handrührers in einer geöffneten perspektivischen Ansicht mit eingesetztem Rührwerkzeug;
- Fig. 3: das Ausführungsbeispiel des erfindungsgemäßen Handrührers in einer geöffneten perspektivischen Ansicht mit eingesetztem Mixwerkzeug.

### Ausführliche Beschreibung anhand eines Ausführungsbeispiels

Bei der nachfolgenden Beschreibung eines Handrührers sowie einer bevorzugten Ausführungsform der vorliegenden Erfindung bezeichnen gleiche Bezugszeichen gleiche oder vergleichbare Komponenten. Der Übersichtlichkeit halber sind nicht in allen Figuren alle Bezugszeichen eingetragen.

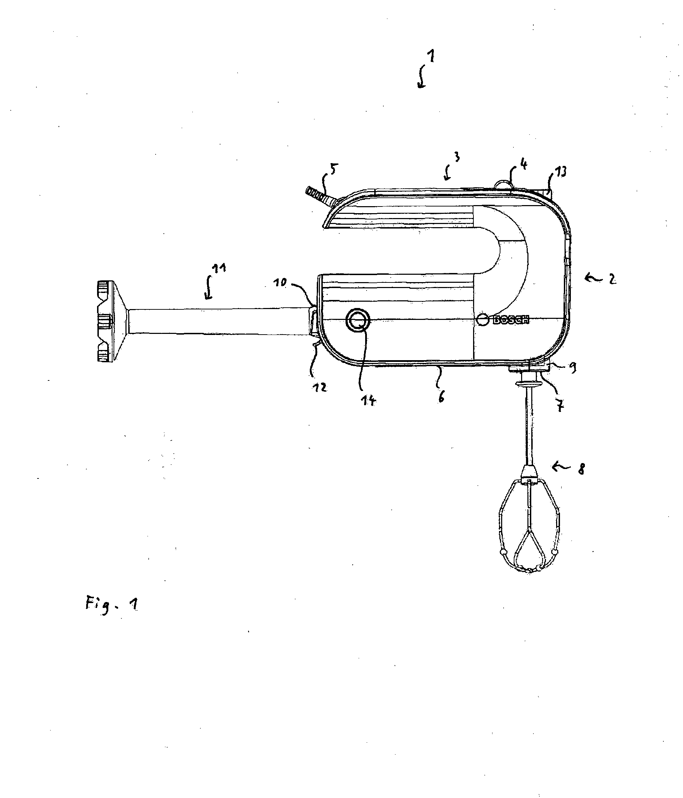

Ein Handrührer 1 weist gemäß Fig. 1 ein Gehäuse 2 mit einem Handgriff 3 auf, in dessen hinterem Bereich ein zylinderförmiger Drehschalter 4 zum Ansteuern eines im Gehäuse 2 angeordneten elektrischen Motors angeordnet ist. Im rückwärtigen Bereich des Handgriffs 3 ist ein Knickschutz 5 für ein nicht dargestelltes Netzkabel vorgesehen. Der Handgriff 3 bildet mit dem übrigen Teil des Gehäuses 2 eine zur Rückseite des Gehäuses hin offene Eingriffsöffnung zum Halten des Handgriffs 3 mit einer Hand. Im Gehäuseboden 6 befinden sich zwei Öffnungen 7, durch die von außen ein Rührwerkzeug, beispielsweise ein Paar Rührbesen 8, in entsprechende innerhalb des Gehäuses 2 angeordnete Kupplungen angekuppelt werden kann. Zur Erleichterung des Einsetzens kann am Gehäuse ein kurzer Stutzen 9 vorstehen. An der Rückseite des Gehäuses ist durch eine Öffnung 10 eine innerhalb des Gehäuses 2 angeordnete Kupplungseinrichtung zum Ankuppeln eines Mixwerkzeugs, insbesondere eines Schnellmixstabs 11, zugänglich. Zum Betätigen eines Verschlussmittels zum Verschließen der Öffnung 10 ist eine Handhabe 12 vorgesehen. Ferner sind am Gehäuse 2 ein Betätigungselement 13 zum Auswerfen des Rührwerkzeugs sowie ein Betätigungselement 14 zum Auswerfen des Mixwerkzeugs angeordnet. Der Handrührer 1 entspricht insoweit einem erfindungsgemäßen Handrührer. Zur Verdeutlichung der Erfindung ist der Handrührer 1 in Fig. 1 jedoch in einem Zustand gezeigt, in dem sowohl das Rühr- als auch das Mixwerkzeug eingesetzt sind, was durch die erfindungsgemäße Ausbildung des Handrührers 1 verhindert wird.

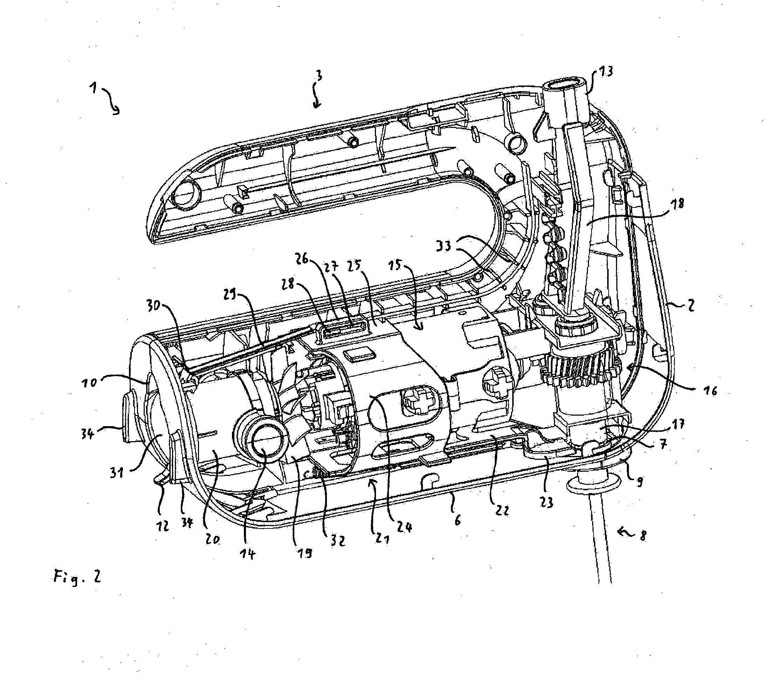

Wie in Fig. 2 in einer perspektivischen Ansicht, bei der eine Seitenwand des Gehäuses 2 entfernt ist, erkennbar ist, treibt der Motor 15 über ein Schneckengetriebe 15 zwei Kupplungen an, wobei nur die Kupplung 17 in Fig. 2 sichtbar ist. In die Kupplung 17 ist ein Rührbesen 8 zum Antrieb durch den Motor 15 eingesetzt; in die nicht sichtbare Kupplung ist ein weiterer Rührbesen einsetzbar. Im eingesetzten Zustand werden die Rührbesen 8 von den Kupplungen 17 gehalten. Zum Auswerfen der Rührbesen 8 wird ein Auswerfer 18 betätigt, der auf die Kupplungen 17 zum Freigeben und Auswerfen der Rührbesen 8 einwirkt. Der Auswerfer 18 kann von einer Oberseite des Gehäuses 2 über ein Betätigungselement 12 betätigt werden. Über die Welle des Motors 15, auf der ein Flügelrad 19 zur Kühlung des Motors 15 angeordnet ist, ist ferner eine weitere Kupplung 20 antreibbar, die zum Einsetzen und Halten eines Mixwerkzeugs ausgebildet ist, das im eingesetzten Zustand vom Motor 15 antreibbar ist. Der weiteren Kupplung 20 ist ebenfalls ein Auswurfmechanismus zum Lösen und Auswerfen des Mixwerkzeugs zugeordnet, der über ein Betätigungselement 13 betätigbar ist. Ferner umfasst der Handrührer 1 eine nicht dargestellte Steuerungseinrichtung, die insbesondere Betriebsschalter zur Steuerung der Drehzahl des Motors 15 umfassen kann.

Wie in Fig. 2 gezeigt, ist nahe dem Gehäusebodens 6 ein Verschlussschieber 21 in einer Längsrichtung des Gehäuses 2 verschiebbar gelagert. Der Verschlussschieber 21 umfasst eine nahe dem Gehäuseboden angeordnete untere Platte 22, an die zwei nach unten abgekröpfte Verschlussklappen 23 angeformt sind, von denen in Fig. 2 nur eine erkennbar ist. In der in Fig. 2 gezeigten Stellung befindet sich der Verschlussschieber 21 in einer hinteren Position, in der die Verschlussklappen 23 die Öffnungen 7 im Gehäuseboden 6, durch die die Rührbesen 8 in die Kupplungen 17 eingesetzt werden können, frei geben. Der Verschlussschieber 21 umfasst ferner einen Bügel 24, der den Motor 14 seitlich umgreift, sowie eine obere Platte 25, die eine Öse 26 mit einem Langloch 27 trägt. In das Langloch 27 greift ein Mitnehmer 28 ein, der an einem in der Längsrichtung des Gehäuses 2 verschiebbaren flexiblen Band 29 gehalten ist. Die Enden des Langlochs 27 bilden jeweils Anschläge für den Mitnehmer.

Das Band 29 setzt über gelenkig ausgebildete Befestigungsmittel 30 am oberen Rand einer Verschlussklappe 31 an, die zum Verschließen der Öffnung 10, durch die das Mixwerkzeug in die Kupplung 20 einsetzbar ist, angeordnet ist. Die Verschlussklappe 31 weist eine Handhabe 12 auf, über die ein Benutzer die Verschlussklappe 31 verschieben kann. Am unteren Rand der Verschlussklappe 31 setzt eine in Fig. 2 symbolisch dargestellte Schraubenfeder 32 an, die mit ihrem anderen Ende am Gehäuseboden 6 ansetzt und durch die die Verschlussklappe 31 in die in Fig. 2 gezeigte Schließstellung vorgespannt wird. Hierdurch wird auch das Band 29 vorgespannt, das in seinem vorderen Bereich über Umlenkmittel 33 geführt wird und im oberen Bereich des Gehäuses 2 fest oder in Längsrichtung federbelastet beweglich gehalten ist.

Die Verschlussklappe 31 ist entsprechend der Form des Gehäuses 2 im betreffenden Bereich gekrümmt ausgebildet. Zur Führung der Verschlussklappe 31 entlang einer gekrümmten Bahn können entsprechende Nuten auf der Innenseite des Gehäuses 2 vorgesehen sein. Die Verschlussklappe 31 kann ausgebildet sein, um die Öffnung 10 weitgehend dicht zu verschließen, kann aber auch beispielsweise perforiert ausgebildet sein, um einen Luftzustrom zur Kühlung des Motors 15 zu ermöglichen. An der Rückseite des Gehäuses 2 sind im Bereich der Öffnung 10 zwei Aufstellhilfen 34 angeordnet, die auf einer ebenen Fläche eine stabile Standposition des Handrührers 1 ermöglichen.

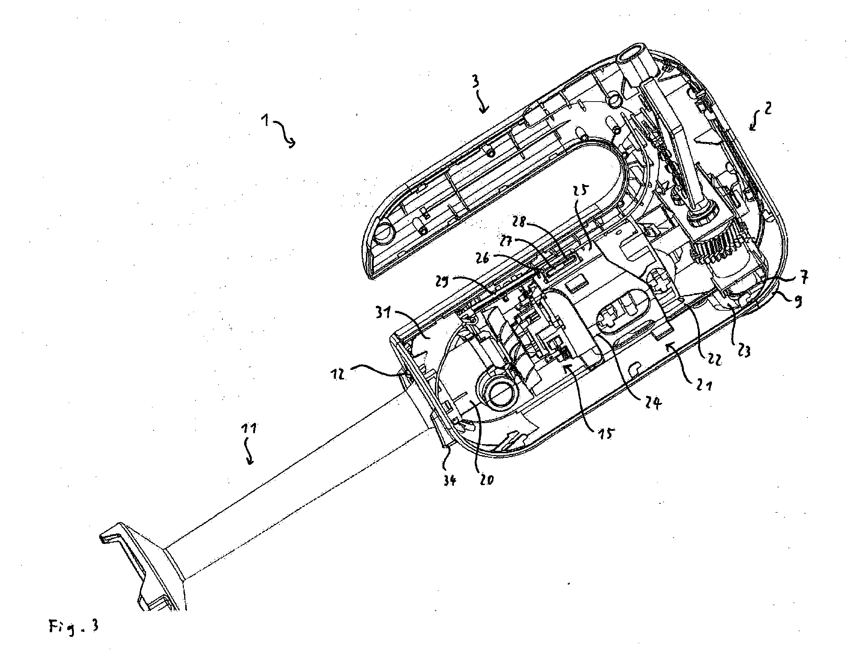

In Fig. 3 ist dargestellt, dass in den Handrührer 1 ein Mixwerkzeug, nämlich ein Schnellmixstab 11, eingesetzt und über die entsprechende Kupplung 20 durch den Motor 15 antreibbar ist. Hierfür befindet sich die Verschlussklappe 31 in einer oberen Position, in der die Öffnung 10 durch eine unterhalb der Handhabe 12 ausgebildete Öffnung der Verschlussklappe 31 zum Einsetzen des Mixwerkzeugs freigegeben ist. In dieser Position ist die in Fig. 2 symbolisch gezeigte Schraubenfeder 32 verlängert (in Fig. 3 nicht dargestellt). Das Band 29 ist in seinem mittleren Bereich, in dem der Mitnehmer 28 gehalten ist, in Längsrichtung des Gehäuses 2 in eine vordere Position verschoben. Das flexible Band 29 ermöglicht den Ausgleich einer Höhenänderung des Befestigungsmittels 30 bei der Bewegung der Verschlussklappe 31. Durch den Mitnehmer 28, der am vorderen Anschlag innerhalb des Langlochs 27 anliegt, ist über die Öse 26 der Verschlussschieber 21 in eine vordere Position verschoben, in der die Verschlussklappen 23 die Öffnungen 7 für das Rührwerkzeug verschließen. Durch das Langloch 27 können unterschiedlich lange Verschiebewege des Verschlussschiebers 21 und der Verschlussklappe 31 ausgeglichen werden. Relativ zum Gehäuse 2 kann der Hub des Bandes 29 im Bereich des Mitnehmers 28 beispielsweise 26 mm betragen, während der Hub des Verschlussschiebers 21 und damit der Verschlussklappen 23 beispielsweise nur 16 mm beträgt.

Zur Benutzung des Handrührers 1 mit einem Rührwerkzeug, beispielsweise den Rührbesen 8, wird die Handhabe 12 in eine untere Position gebracht. In dieser Position ist die Öffnung 10 zum Einsetzen eines Mixwerkzeugs verschlossen und die Öffnung 7 zum Einsetzen des Rührwerkzeugs geöffnet. In diesem Zustand können die Rührbesen 8 in die Kupplungen 17 eingesetzt und durch Betätigung eines Betriebsschalters vom Motor 15 angetrieben werden.

Soll nun ein Mixwerkzeug, beispielsweise ein Schnellmixstab 11, angesetzt werden, so sind zunächst die Rührbesen 8 durch Betätigung des Auswerfers 18 auszuwerfen. Sodann ist die Handhabe 12 aus der in Fig. 2 gezeigten unteren Position in eine obere Position zu schieben, in der die Öffnung 10 freigegeben wird und der Schnellmixstab 11 in die Kupplung 20 eingesetzt werden kann. Durch Verschieben der Verschlussklappe 31 mit Hilfe der Handhabe 12 wird das Band 29 in eine vordere Position verschoben, der Mitnehmer 28 gelangt zunächst an den vorderen Anschlag innerhalb des Langlochs 27, bewegt sich dann weiter nach vorne und nimmt dabei den Verschlussschieber 21 mit. Der Verschlussschieber 21 mit den Verschlussklappen 23 wird dadurch in die in Fig. 3 gezeigte vordere Position verschoben, in der die Öffnungen 7 verschlossen sind. Es kann daher nun kein Rührwerkzeug eingesetzt werden.

Soll wieder mit einem Rührwerkzeug gearbeitet werden, so ist durch Betätigung des Auswerfers 21 der Schnellmixstab 11 vom Handrührer 1 zu lösen und die Handhabe 12 in die untere Position zu bringen. Hierdurch wird das Band 29 nach hinten verschoben, der Mitnehmer gelangt zunächst an seinen hinteren Anschlag innerhalb des Langlochs 27 und bewegt sich dann noch weiter nach hinten, so dass der Verschlussschieber 21 in seine in Fig. 2 gezeigte hintere Position verschoben wird und die Verschlussklappen 23 die Öffnungen 7 freigeben. Es kann nun wieder ein Rührwerkzeug eingesetzt werden. Ein Einsetzen eines Mixwerkzeugs ist nicht möglich.

Bei dem erfindungsgemäßen Handrührer kann ein gleichzeitiges Einsetzen eines Rührwerkzeugs und eines Mixwerkzeugs mit einer erhöhten Sicherheit verhindert werden. Ferner kann auch ein unabsichtlicher Eingriff eines Benutzers und/oder eine Verschmutzung durch Eindringen von Partikeln oder Flüssigkeiten in eine nicht benutzte Öffnung des Gehäuses vermieden werden.

### Bezugszeichenliste

- 1: Handrührer
- 2: Gehäuse
- 3: Handgriff
- 4: Drehschalter
- 5: Knickschutz
- 6: Gehäuseboden
- 7: Öffnung
- 8: Rührbesen
- 9: Stutzen
- 10: Öffnung
- 11: Schnellmixstab
- 12: Handhabe
- 13: Betätigungselement
- 14: Betätigungselement
- 15: Motor
- 16: Schneckengetriebe
- 17: Kupplung
- 18: Auswerfer
- 19: Flügelrad
- 20: Kupplung
- 21: Verschlussschieber
- 22: Untere Platte
- 23: Verschlussklappe
- 24: Bügel
- 25: Obere Platte
- 26: Öse
- 27: Langloch
- 28: Mitnehmer
- 29: Band
- 30: Befestigungsmittel
- 31: Verschlussklappe
- 32: Schraubenfeder
- 33: Umlenkmittel
- 34: Aufstellhilfe

## Patentansprüche

1. Handrührer (1) mit einem Gehäuse (2), einer Antriebseinrichtung mit einem Motor (15), einer durch eine erste Öffnung (7) des Gehäuses (2) zugänglichen ersten Kupplungseinrichtung zum Ankuppeln eines Rührwerkzeugs an die Antriebseinrichtung und einer durch eine zweite Öffnung (10) des Gehäuses (2) zugänglichen zweiten Kupplungseinrichtung zum Ankuppeln eines Mixwerkzeugs an die Antriebseinrichtung, wobei der Handrührer (1) erste Verschlussmittel zum Verschließen der ersten Öffnung (7) und zweite Verschlussmittel zum Verschließen der zweiten Öffnung (10) aufweist, die derart miteinander verbunden sind, dass entweder nur die erste Öffnung (7) oder nur die zweite Öffnung (10) geöffnet ist, wobei die ersten Verschlussmittel mindestens eine erste Verschlussklappe (23) zum Verschließen der ersten Öffnung (7) und die zweiten Verschlussmittel mindestens eine zweite Verschlussklappe (31) zum Verschließen der zweiten Öffnung (10) umfassen, **dadurch gekennzeichnet, dass** die mindestens eine erste Verschlussklappe (23) und die mindestens eine zweite Verschlussklappe (31) durch ein auf Zug belastbares flexibles Verbindungsmittel miteinander verbunden sind, insbesondere durch ein flexibles Band (29).

2. Handrührer (1) nach Anspruch 1, **dadurch gekennzeichnet, dass** das flexible Verbindungsmittel vorgespannt ist.

3. Handrührer (1) nach dem vorhergehenden Anspruch, **dadurch gekennzeichnet, dass** mindestens eine der Verschlussklappen (23, 31) durch eine Feder vorgespannt ist.

4. Handrührer (1) nach dem vorhergehenden Anspruch, **dadurch gekennzeichnet, dass** die mindestens eine durch die Feder vorgespannte Verschlussklappe in eine Schließstellung vorgespannt ist.

5. Handrührer (1) nach einem der Ansprüche 1 bis 4, **dadurch gekennzeichnet, dass** die mindestens eine erste Verschlussklappe (23) als Teil eines Verschlussschiebers (21) ausgebildet ist, der eine Öse (26) aufweist, in die ein Mitnehmer (28) des flexiblen Verbindungsmittels eingreift.

6. Handrührer (1) nach dem vorhergehenden Anspruch, **dadurch gekennzeichnet, dass** die Öse (26) ein sich in Verschieberichtung des Verschlussschiebers erstreckendes Langloch (27) ausbildet, innerhalb dessen der Mitnehmer (28) über eine begrenzte Strecke beweglich ist.

7. Handrührer (1) nach einem der Ansprüche 1 bis 6, **dadurch gekennzeichnet, dass** das flexible Verbindungsmittel mit einem Steuerungselement zum Ansteuern des Motors zusammenwirkt.

8. Handrührer (1) nach einem der Ansprüche 1 bis 7, **dadurch gekennzeichnet, dass** die mindestens eine erste Verschlussklappe (23) und/oder die mindestens eine zweite Verschlussklappe (31) mit einer Handhabe (12) zum Betätigen der ersten und der zweiten Verschlussmittel versehen ist bzw. sind.

9. Handrührer (1) nach einem der vorhergehenden Ansprüche, **dadurch gekennzeichnet, dass** die Öffnungen (7, 10) näherungsweise eine erste und eine zweite Öffnungsebene definieren, die nicht miteinander zusammenfallen.

10. Handrührer (1) nach dem vorhergehenden Anspruch, **dadurch gekennzeichnet, dass** die erste und die zweite Öffnungsebene näherungsweise senkrecht aufeinander stehen.

11. Handrührer (1) nach einem der vorhergehenden Ansprüche, **dadurch gekennzeichnet, dass** die erste Öffnung (7) und die zweite Öffnung (10) an unterschiedlichen Seiten des Gehäuses (2) angeordnet sind.

12. Handrührer (1) nach einem der vorhergehenden Ansprüche, **dadurch gekennzeichnet, dass** das Rührwerkzeug und/oder das Mixwerkzeug mehrere zusammenwirkende Teilwerkzeuge umfassen und dass die erste und/oder die zweite Kupplungseinrichtung mehrere Kupplungen (16, 20) für die Teilwerkzeuge aufweisen.

13. Handrührer (1) nach einem der vorhergehenden Ansprüche, **dadurch gekennzeichnet, dass** die erste Öffnung (7) und/oder die zweite Öffnung (10) mehrere Teilöffnungen umfassen.

## Claims

1. Hand mixer (1) with a housing (2), a drive device with a motor (15), a first coupling device accessible through a first opening (7) of the housing (2) for coupling a stirrer to the drive device and a second coupling device accessible through a second opening (10) of the housing (2) for coupling a mixer to the drive device, wherein the hand mixer (1) has first sealing means for sealing the first opening (7) and second sealing means for sealing the second opening (10), which are connected to one another such that either only the first opening (7) or only the second opening (10) is open, wherein the first sealing means comprises at least one first sealing cap (23) for sealing the first opening' (7) and the second sealing means comprises at least one second sealing cap (31) for sealing the second opening (10), **characterised in that** the at least one first sealing cap (23) and the at least one second sealing cap (31) are connected to one another by means of a flexible connecting means able to be subjected to tension, in particular by means of a flexible band (29).

2. Hand mixer (1) according to claim 1, **characterised in that** the flexible connecting means is pretensioned.

3. Hand mixer (1) according to the preceding claim, **characterised in that** at least one of the sealing caps (23, 31) is pretensioned by means of a spring.

4. Hand mixer (1) according to the preceding claim, **characterised in that** the at least one sealing cap pretensioned by means of a spring is pretensioned in a closed position.

5. Hand mixer (1) according to one of claims 1 to 4, **characterised in that** the at least one first sealing cap (23) is embodied as part of a sealing slider (21) which has an eyelet (26) with which a carrier (28) of the flexible connecting means engages.

6. Hand mixer (1) according to the preceding claim, **characterised in that** the eyelet (26) forms an elongated hole (27) extending in the displacement direction of the sealing slider, within which the carrier (28) is moveable over a limited distance.

7. Hand mixer (1) according to one of claims 1 to 6, **characterised in that** the flexible connecting means interacts with a control element for controlling the motor.

8. Hand mixer (1) according to one of claims 1 to 7, **characterised in that** the at least one first sealing cap (23) and/or the at least one second sealing cap (31) is/are provided with a grip (12) for activating the first and the second sealing means.

9. Hand mixer (1) according to one of the preceding claims, **characterised in that** the openings (7, 10) approximately define a first and a second opening level which do not coincide with one another.

10. Hand mixer (1) according to the preceding claim, **characterised in that** the first and the second opening levels are approximately perpendicular to one another.

11. Hand mixer (1) according to one of the preceding claims, **characterised in that** the first opening (7) and the second opening (10) are arranged on different sides of the housing (2).

12. Hand mixer (1) according to one of the preceding claims, **characterised in that** the stirrer and/or the mixer comprise a number of interacting tool parts and that the first and/or the second coupling device have a number of couplings (16, 20) for the tool parts.

13. Hand mixer (1) according to one of the preceding claims, **characterised in that** the first opening (7) and/or the second opening (10) comprise a number of partial openings.

## Revendications

1. Batteur à main (1) comprenant un boîtier (2), un dispositif d'entraînement muni d'un moteur (15), un premier dispositif d'accouplement accessible par une première ouverture (7) du boîtier (2), destiné à accoupler un outil d'agitation au dispositif d'entraînement, et un deuxième dispositif d'accouplement accessible par une deuxième ouverture (10) du boîtier (2), destiné à accoupler un outil de mixage au dispositif d'entraînement, le batteur à main (1) présentant des premiers moyens de fermeture destinés à fermer la première ouverture (7) et des deuxièmes moyens de fermeture destinés à fermer la deuxième ouverture (10), lesquels sont reliés entre eux de manière à ce que soit seulement la première ouverture (7) soit seulement la deuxième ouverture (10) soit ouverte, les premiers moyens de fermeture comprenant au moins un premier clapet de fermeture (23) pour fermer la première ouverture (7) et les deuxièmes moyens de fermeture comprenant au moins un deuxième clapet de fermeture (31) pour fermer la deuxième ouverture (10), **caractérisé en ce que** l'au moins un premier clapet de fermeture (23) et l'au moins un deuxième clapet de fermeture (31) sont reliés entre eux par un moyen de liaison flexible pouvant être contraint par traction, notamment par une bande flexible (29).

2. Batteur à main (1) selon la revendication 1, **caractérisé en ce que** le moyen de liaison flexible est précontraint.

3. Batteur à main (1) selon la revendication précédente, **caractérisé en ce qu'**au moins un des clapets de fermeture (23, 31) est précontraint par un ressort.

4. Batteur à main (1) selon la revendication précédente, **caractérisé en ce que** l'au moins un clapet de fermeture précontraint par le ressort est précontraint dans une position de fermeture.

5. Batteur à main (1) selon l'une quelconque des revendications 1 à 4, **caractérisé en ce que** l'au moins un premier clapet de fermeture (23) est réalisé comme partie d'un coulisseau de fermeture (21) qui présente un oeillet (26) dans lequel a prise un entraîneur (28) du moyen de liaison flexible.

6. Batteur à main (1) selon la revendication précédente, **caractérisé en ce que** l'oeillet (26) forme un trou oblong (27) s'étendant dans le sens de coulissement du coulisseau de fermeture, à l'intérieur duquel trou oblong l'entraîneur (28) est déplaçable sur un trajet limité.

7. Batteur à main (1) selon l'une quelconque des revendications 1 à 6, **caractérisé en ce que** le moyen de liaison flexible coopère avec un élément de commande destiné à commander le moteur.

8. Batteur à main (1) selon l'une quelconque des revendications 1 à 7, **caractérisé en ce que** l'au moins un premier clapet de fermeture (23) et/ou l'au moins un deuxième clapet de fermeture (31) est muni resp. sont munis d'une prise (12) pour actionner le premier et le deuxième moyens de fermeture.

9. Batteur à main (1) selon l'une quelconque des revendications précédentes, **caractérisé en ce que** les ouvertures (7, 10) définissent approximativement un premier et un deuxième plans d'ouverture qui ne coïncident pas entre eux.

10. Batteur à main (1) selon la revendication précédente, **caractérisé en ce que** le premier et le deuxième plans d'ouverture sont situés approximativement perpendiculairement l'un par rapport à l'autre.

11. Batteur à main (1) selon l'une quelconque des revendications précédentes, **caractérisé en ce que** la première ouverture (7) et la deuxième ouverture (10) sont disposées sur des côtés différents du boîtier (2).

12. Batteur à main (1) selon l'une quelconque des revendications précédentes, **caractérisé en ce que** l'outil d'agitation et/ou l'outil de mixage comprennent plusieurs outils partiels agissant entre eux et **en ce que** le premier et/ou le deuxième dispositifs d'accouplement présentent plusieurs accouplements (16, 20) pour les outils partiels.

13. Batteur à main (1) selon l'une quelconque des revendications précédentes, **caractérisé en ce que** la première ouverture (7) et/ou la deuxième ouverture (10) comprennent plusieurs ouvertures partielles.
